# EUROPEAN PATENT APPLICATION

(11) **EP 3 522 595 A1**
(43) Date of publication of application: **07.08.2019**
(21) Application number: 17856408.4
(22) Date of filing: 29.09.2017
(51) Int. Cl.: H04W 28/06, H04W 28/04, H04W 72/04, H04W 16/14

(54) **USER TERMINAL AND WIRELESS COMMUNICATIONS METHOD**

(30) Priority: 29.09.2016 JP 2016192336
(71) Applicant: NTT DOCOMO, INC., Chiyoda-ku Tokyo 100-6150 (JP)
(72) Inventor: HARADA, Hiroki, Tokyo 100-6150 (JP); NAGATA, Satoshi, Tokyo 100-6150 (JP); WANG, Jing, Beijing 100190 (CN); LIU, Liu, Beijing 100190 (CN)
(74) Representative: Hoffmann Eitle
(86) International application number: PCT/JP2017/035389
(87) International publication number: WO 2018/062459

(57) **Abstract**

The present invention is designed so that uplink control information such as delivery acknowledgment signals can be transmitted properly, even when UL/DL configurations are changed, in a communication system that is configured to use listening. A receiving section that receives downlink control information and downlink data which are transmitted in a DL burst period, and a control section that controls transmission of a delivery acknowledgment signal in response to the downlink data, based on the result of UL listening, are provided, and, when a UL burst is configured in the DL burst period, the control section exerts control to transmit the delivery acknowledgment signal in response to the downlink data by using at least one of the UL burst, a UL transmission period, where UL transmission is commanded outside the DL burst period and a UL burst which is configured in another DL burst period following the DL burst period, based on a reception timing of the downlink data.

## Description

### Technical Field

The present invention relates to a user terminal and a radio communication method in next-generation mobile communication systems.

### Background Art

In the UMTS (Universal Mobile Telecommunications System) network, the specifications of long term evolution (LTE) have been drafted for the purpose of further increasing high speed data rates, providing lower delays and so on (see non-patent literature 1). Furthermore, the specifications of LTE-advanced (Rel. 10 to 12) have been drafted for the purpose of achieving further broadbandization and higher speeds beyond LTE, and, in addition, for example, a successor system of LTE -- referred to as "5G" (5th generation mobile communication system) -- is under study.

The specifications of LTE of Rel. 8 to 12 have been drafted on assumption that exclusive operations are carried out in frequency bands that are licensed to communications providers (operators) (also referred to as "licensed CCs" (or "licensed bands")). As licensed CCs, for example, 800 MHz, 1.7 GHz and 2 GHz are used.

In recent years, user traffic has been increasing steeply following the spread of high-performance user terminals (UE (User Equipment)) such as smart-phones and tablets. Although more frequency bands need to be added to accommodate this increasing user traffic, licensed CCs have limited spectra (licensed spectra).

Consequently, a study is in progress with Rel. 13 LTE to enhance the frequencies of LTE systems by using bands of unlicensed spectra (also referred to as "unlicensed CCs" (or "unlicensed bands")) that are available for use apart from licensed CCs (see non-patent literature 2). For unlicensed CCs, for example, the 2.4 GHz band and the 5 GHz band, where Wi-Fi (registered trademark) and Bluetooth (registered trademark) can be used, are under study for use.

To be more specific, Rel. 13 LTE is presently under study to apply carrier aggregation (CA) between licensed CCs and unlicensed CCs. In this way, communication that is performed by using unlicensed CCs together with licensed CCs is referred to as "LAA (License-Assisted Access)." Note that, in the future, dual connectivity (DC) between licensed CCs and unlicensed CCs and stand-alone (SA) of unlicensed CCs may become the subject of study under LAA. Furthermore, it is likely that radio communication methods to use unlicensed bands (or listening) will be introduced in future radio communication system, including 5G, 5G+ (plus), NR (New RAT), LTE Rel. 14 or later versions, and so forth.

### Citation List

### Non-Patent Literature

Non-Patent Literature 1: 3GPP TS 36.300 "Evolved Universal Terrestrial Radio Access (E-UTRA) and Evolved Universal Terrestrial Radio Access Network (E-UTRAN); Overall description; Stage 2"
Non-Patent Literature 2: AT&T, Drivers, Benefits and Challenges for LTE in Unlicensed Spectrum, 3GPP TSG-RAN Meeting #62 RP-131701

### Summary of Invention

### Technical Problem

For unlicensed CCs, a study is in progress to introduce interference control functionality in order to allow co-presence with other operators' LTE, Wi-Fi and/or other systems. In Wi-Fi, LBT (Listen Before Talk), which is based on CCA (Clear Channel Assessment), is used as an interference control function for use within the same frequency.

Consequently, there is an agreement to control DL transmission by applying "listening" (for example, LBT) as an interference control function, even when unlicensed CCs are configured in LTE systems. Meanwhile, even for UL transmission (for example, transmission of an uplink control channel), studies are on-going to control transmission based on listening results as in DL transmission. Listening that is performed prior to transmission is also referred to as "channel access procedure."

Furthermore, for LAA, research is underway on controlling the UL/DL communicating direction in each subframe by changing the communicating direction based on scheduling and/or other conditions (without configuring UL/DL configurations on a fixed basis). The problem in this case lies in how to control the transmission of delivery acknowledgment signals when a user terminal sends feedback of delivery acknowledgment signals (also referred to as "HARQ-ACK," "ACK/NACK," "A/N," etc.) in response to DL transmission, in an uplink control channel.

The present invention has been made in view of the above, and it is therefore an object of the present invention to provide a user terminal and a radio communication method, whereby uplink control information such as delivery acknowledgment signals can be transmitted properly, even when UL/DL configurations are changed, in a communication system that is configured to use listening.

### Solution to Problem

According to one example of the present invention, a user terminal has a receiving section that receives downlink control information and downlink data which are transmitted in a DL burst period, and a control section that controls transmission of a delivery acknowledgment signal in response to the downlink data, based on the result of UL listening, are provided, and, when a UL burst is configured in the DL burst period, the control section exerts control to transmit the delivery acknowledgment signal in response to the downlink data by using at least one of the UL burst, a UL transmission period where UL transmission is commanded outside the DL burst period and a UL burst which is configured in another DL burst period following the DL burst period, based on a reception timing of the downlink data.

### Advantageous Effects of Invention

According to the present invention, uplink control information such as delivery acknowledgment signals can be transmitted properly, even when UL/DL configurations are changed, in a communication system that is configured to use listening.

### Brief Description of Drawings

FIG. 1 is a diagram to show an example of a communication method using channel access procedures;
FIG. 2 is a diagram to show an example of A/N transmission in an unlicensed SCell;
FIG. 3 is a diagram to show an example of A/N transmission timing according to the present embodiment;
FIG. 4 is a diagram to show another example of A/N transmission timing according to the present embodiment;
FIG. 5 is a diagram to show an example of the method of controlling codebook size upon A/N transmission, according to the present embodiment;
FIG. 6 is a diagram to show another example of the method of controlling codebook size upon A/N transmission according to the present embodiment;
FIG. 7 is a diagram to show an exemplary schematic structure of a radio communication system according to the present embodiment;
FIG. 8 is a diagram to show an exemplary functional structure of a radio base station according to the present embodiment;
FIG. 9 is a diagram to show an exemplary functional structure of a baseband signal processing section provided in a radio base station;
FIG. 10 is a diagram to show an example of a functional structure of a user terminal according to the present embodiment;
FIG. 11 is a diagram to show an exemplary functional structure of a baseband signal processing section provided in a user terminal; and
FIG. 12 is a diagram to show an exemplary hardware structure of a radio base station and a user terminal according to one embodiment of the present invention.

### Description of Embodiments

In systems that run LTE/LTE-A in unlicensed CCs (for example, LAA systems), interference control functionality is likely to be necessary in order to allow co-presence with other operators' LTE, Wi-Fi and/or other systems. In this case, efficient and fair co-presence with other systems and other operators is required. Note that systems that run LTE/LTE-A in unlicensed CCs may be collectively referred to as "LAA," "LAA-LTE," "LTE-U," "U-LTE" and so on, regardless of whether the mode of operation is CA, DC or SA.

Generally speaking, when a transmission point (for example, a radio base station (eNB), a user terminal (UE) and so on) that communicates by using a carrier (which may also be referred to as a "carrier frequency," or simply a "frequency") of an unlicensed CC detects another entity (for example, another user terminal) that is communicating using this unlicensed CC's carrier, the transmission point is disallowed to make transmission in this carrier.

Therefore, the transmission point performs "listening" (LBT (Listen Before Talk)) at a timing a predetermined period before a transmission timing. To be more specific, by executing LBT, the transmission point searches the whole of the target carrier band (for example, one component carrier (CC)) at a timing that is a predetermined period before a transmission timing, and checks whether or not there are other pieces of apparatus (for example, radio base stations, user terminals, Wi-Fi apparatus and so on) communicating in this carrier band.

Note that "listening" refers to the operation which a given transmission point (for example, a radio base station, a user terminal and so on) performs before transmitting signals so as to check whether or not signals to exceed a predetermined level (for example, predetermined power) are being transmitted from other transmission points. Furthermore, listening that is performed by radio base stations and/or user terminals may be referred to as "channel access procedures," "LBT," "CCA (Clear Channel Assessment)," "carrier sensing" and so on.

The transmission point then carries out transmission using this carrier only if it is confirmed that no other apparatus is communicating. If the received power measured during LBT (the received signal power during listening period) is equal to or lower than a predetermined threshold, the transmission point judges that the channel is in the idle state (LBT_{idle}), and carries out transmission. When a "channel is in the idle state," this means that, in other words, the channel is not occupied by a specific system, and it is equally possible to say that a channel is "idle," a channel is "clear," a channel is "free," and so on.

On the other hand, if only just a portion of the target carrier band is detected to be used by another piece of apparatus, the transmission point stops its transmission. For example, if the transmission point detects that the received power of a signal from another piece of apparatus in this band exceeds a predetermined threshold, the transmission point judges the channel is in the busy state (LBT_{busy}), and makes no transmission. In the event LBT_{busy} is yielded, LBT is carried out again with respect to this channel, and the channel becomes available for use only after the idle state is confirmed. Note that the method of judging whether a channel is in the idle state/busy state based on LBT is by no means limited to this.

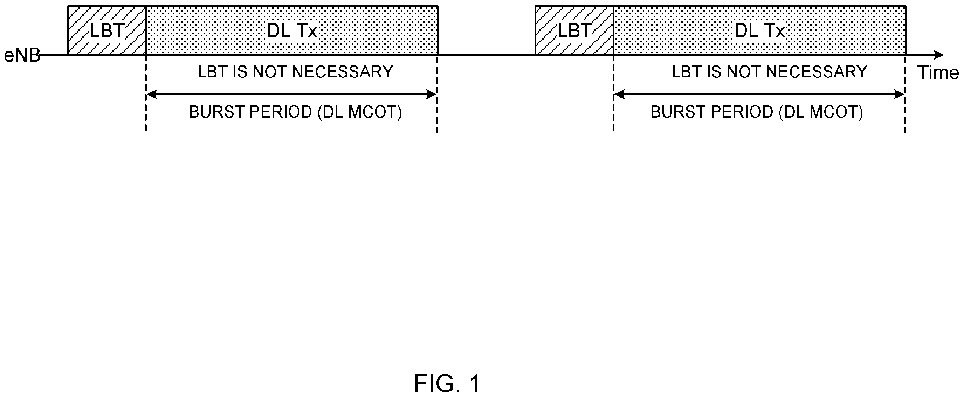

FIG. 1 shows example of communication methods using channel access procedures. In the event of DL communication, when the result of listening (DL-LBT) performed by a radio base station before DL transmission is "LBT-idle," a period, in which DL transmission to skip LBT (DL burst transmission) is allowed, can be configured (FIG. 1). The period during which transmission is allowed without performing LBT after listening (in the event of LBT-idle) is also referred to as "DL maximum channel occupancy time (DL MCOT)," "channel occupancy time," "burst period" (burst transmission period, burst length, maximum burst length, maximum possible burst length, etc.) and so on. Also in the event of UL communication, it is possible to control the execution of LBT.

As described above, by introducing interference control that is based on LBT mechanism in LAA systems, it becomes possible to prevent interference between LAA and Wi-Fi, interference between LAA systems and so on. Furthermore, even when transmission points are controlled independently per operator that runs an LAA system, LBT makes it possible to reduce interference without learning the details of each operator's control.

Meanwhile, when the LBT mechanism is introduced in LAA systems, fair co-presence with other systems (for example, Wi-Fi) and other LTE operators is required. For the purpose of ensuring fair co-presence with other systems and other operators, it may be possible to apply random backoff to listening even when LTE/LTE-A systems are used in unlicensed CCs. Random backoff refers to the mechanism by which, even when a channel enters the idle state, each transmission point does not start transmission immediately, but defers transmission for a randomly configured period of time (counter value), and starts transmission when the channel is clear.

For example, if a channel is in a busy state in an unlicensed CC, each transmission point (access point) starts transmitting data when the channel is judged to be in the idle state by means of listening. In this case, if multiple transmission points waiting for the channel to enter the idle state start transmitting simultaneously, there is a high possibility that collisions will occur between the transmission points. Therefore, for the purpose of preventing collisions between transmission points, even when the channel enters the idle state, each transmission point does not transmit immediately and defers transmission for a randomly configured period, thereby reducing the possibility of collisions between the transmission points (random backoff).

Such an LBT mechanism with random backoff is also referred to as "category 4." Meanwhile, the LBT mechanism without random backoff is also referred to as "category 2." Category 2 is an LBT mechanism that permits transmission immediately after a predetermined period of time (also referred to as "defer duration (D_eCCA)") passes, and is also referred to as "25 µs LBT" because 25 µs is prescribed in LAA as an example of the predetermined time.

Studies are in progress to transmit uplink control information in an uplink control channel (for example, PUCCH) in a carrier of an unlicensed CC (hereinafter also referred to as an "unlicensed carrier"). In existing systems (or licensed carriers), it is stipulated that uplink control information in response to DL transmission, such as HARQ-ACKs and/or others, is transmitted in the PUCCH in a UL subframe that is located a certain period, which is configured on a fixed basis, after the DL subframe.

Meanwhile, for LAA, research is underway on controlling the UL/DL communicating direction in each subframe by changing the communicating direction based on scheduling conditions, listening results and so on (without configuring UL/DL configurations on a fixed basis). For example, when a channel is idle due to DL listening, a radio base station might transmit downlink control information and/or downlink data. In addition, the radio base station can command a user terminal to transmit UL data by including a UL transmission command (UL grant) in downlink control information.

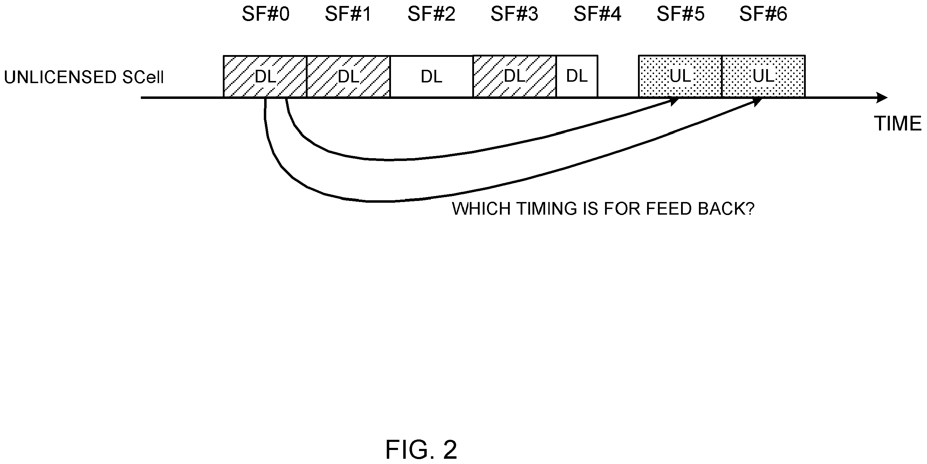

However, if the user terminal sends feedback of uplink control information such as A/Ns in response to DL data, in an uplink control channel, the problem is how to control the transmission of the uplink control channel (for example, transmission timing) when UL/DL configurations are not fixed (see FIG. 2). In the case shown in FIG. 2, DL subframes are configured from SF #0 to SF #4, and UL subframes are configured in SF #5 and SF #6. Referring to FIG. 2, the question is at which timing (UL subframe) the user terminal should transmit A/Ns in response to the DL data scheduled in predetermined DL subframes (here, SF #0, SF #1 and SF #3).

For example, as in the case of UL data transmission, it may be possible to control the timing of sending A/N feedback (PUCCH transmission) based on UL grants transmitted from the radio base station. However, in this case, when transmitting the DL data, it is necessary to transmit the UL grant separately from the downlink control information for scheduling the transmission of the DL data, so that overhead may increase. Therefore, there is a demand for a method for controlling PUCCH transmission (transmission timing, etc.) without using UL grants.

Alternatively, it may be possible to define the timing for sending A/N feedback on a fixed basis. However, in this case, the direction of communication in each subframe is limited, and this makes it difficult to set up UL/DL configurations in a flexible way.

So the present inventors have come up with the idea of controlling A/N feedback by taking into account the reference value for the timing for A/N feedback (the minimum time required to send A/Ns), by using UL subframes that are configured in a flexible manner. To be more specific, the present inventors have paid attention to the fact that there are cases where a UL burst is configured during a DL burst period that follows DL listening (LBT_{idle}), and come up with the idea of using this UL burst to transmit A/Ns in response to DL data that is transmitted during the DL burst period. Also, the present inventors have arrived at controlling A/N feedback in response to DL data transmitted during a DL burst period, by using a UL transmission period (for example, a UL subframe), which follows the DL burst period (and which is located, for example, outside the DL burst period), and in which UL transmission is commanded.

Also, the present inventors have focused on the fact that, when A/Ns are transmitted, how to determine the transmission size (also referred to as "codebook size") of the A/Ns is likely to be a problem. So the present inventors have arrived at controlling codebook size based on a range (window) that is configured based on the location of a subframe in which A/Ns are transmitted, the location of the subframe in which A/Ns are transmitted (immediately) before that subframe, and the reference value for the timing for A/N feedback. In addition, the present inventors have arrived at controlling codebook size by taking into account the number of non-DL subframes (for example, UL subframes), in this window.

Now, embodiments of the present invention will be described below in detail with reference to the accompanying drawings. Each embodiment below will be described on assumption that UE executes UL LBT in unlicensed CCs, but this is by no means limiting. In addition, in the following description, designs that replace a licensed carrier (CC) with a carrier in which listening (LBT) is not configured (and which may be referred to as a "carrier in which listening is not executed/cannot be executed," a "non-listening carrier," etc.), and replace an unlicensed carrier (CC) with a carrier in which listening (LBT) is configured (and which may be referred to as a "carrier in which listening is executed/must be executed," a "listening carrier," etc.) also constitute embodiments of the present invention.

### (First Example)

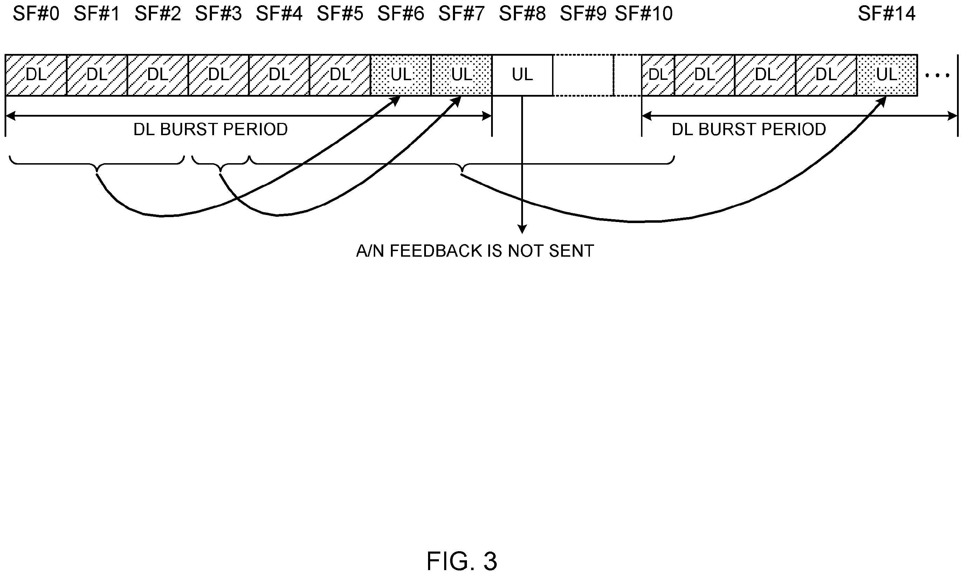

With a first example of the present invention, an example of the timing for transmitting uplink control information (for example, A/Ns) in an unlicensed carrier (for example, an LAA SCell) will be described. FIG. 3 shows an example of the method of transmitting A/Ns in an unlicensed carrier.

As shown in FIG. 3, when a DL burst period (also referred to as "DL MCOT") is configured in every DL burst, a UL burst (for example, a UL subframe) can be configured following DL transmission (for example, a DL subframe). Note that although subframes serve as transmission time intervals in FIG. 3, these subframes may be predetermined time intervals, slots, mini-slots, scheduling units, and so forth.

When a UL burst is configured in a DL burst period, the listening conditions to apply to UL listening that is performed before UL transmission is made using this UL burst may be relaxed compared to normal UL transmission (for example, UL transmission outside the DL burst period). For example, when listening is performed before a UL burst, a user terminal can apply listening conditions in which random backoff is not used (for example, 25 µm LBT). Alternatively, depending on the conditions of UL transmission and/or others, UL listening may be skipped.

Assuming that UL bursts are configured within a DL burst period, information related to the DL bursts (also referred to as "DL burst information," "DL burst configuration information," etc.) and/or information related to the UL bursts (also referred to as "UL burst information," "UL burst configuration information," etc.) may be reported from the radio base station to the user terminal.

The DL bust information may include information that shows the length of the DL bursts (for example, the number of subframes the DL bursts cover) and/or the offset (DL burst end offset) up to the last DL subframe where the DL bursts end (or the first UL (non-DL transmission) subframe following the DL bursts). The UL burst information can include at least one of the length of the UL bursts (for example, the length of the UL bursts configured in the DL burst period), the timing at which the UL bursts start and/or end, and the conditions of listening that is performed before the UL bursts.

The radio base station can include the DL burst information and/or the UL burst information in downlink control information, which is transmitted in the DL bursts, and report this downlink control information to the user terminal. This downlink control information to contain DL burst information and/or UL burst information can be reported by using, for example, common L1 signaling (also referred to as "user-common control information," "common L1 signaling," "common PDCCH," etc.).

Common L1 signaling can be transmitted by using downlink control information (for example, DCI format 1C) in each DL subframe. Information about DL bursts and/or UL bursts is reported to user terminals by using common L1 signaling, and therefore does not have to be reported to every user terminal individually. Also, the radio base station may report information that identifies every DL burst (for example, DL burst indices), to user terminals.

A user terminal sends feedback of A/Ns in response to DL data that is transmitted in each DL burst, in UL subframes that come a predetermined period later. When doing so, the user terminal transmits, for example, an A/N in response to predetermined DL data transmitted in a DL burst, by using a UL burst that is configured in this DL burst period. For example, the user terminal can transmit an A/N in response to a DL subframe in a DL burst period, in a UL subframe in the first UL burst that appears at least a predetermined period later.

As for the predetermined period, it is possible to use the minimum time gap (for example, Y ms) that is required before reaching the timing for sending A/N feedback. Y is also referred to as the "reference value for the timing for A/N feedback." Information related to the reference value (Y) for the timing for A/N feedback may be defined in advance in the specification, on a fixed basis, or may be configured from the radio base station to the user terminal via higher layer signaling, for example. Note that, although the following description will illustrate a case in which, for example, Y=4, the value of Y applicable to the present embodiment is not limited to 4.

FIG. 3 shows a case where a DL burst period (DL MCOT) is configured over SF #0 to SF #7, and where a UL burst period (UL subframe) is configured in SF #6 and SF #7. Obviously, the DL burst period, and/or the number of SFs the DL bursts and/or the UL bursts occupy are not limited to these examples.

The user terminal receives UL burst information and so on from downlink control information (for example, shared PDCCH), which is transmitted in at least one of DL subframes SF #0 to SF #5, included in the DL burst period. The user terminal can also identify the part where the UL bursts (UL subframes) are configured (here, SF #6 and SF #7) based on the UL burst information.

The user terminal controls the timing for A/N feedback by taking into account the timing each DL data is received (the location of each DL subframe), the location where the UL bursts (UL subframes) are configured, and the reference value Y. For example, the user terminal can transmit A/Ns in response to SF #0 to SF #2, among DL subframes SF #0 to SF #5 included in the DL burst period, by using SF #6, which is the first UL burst to appear a predetermined period or more later (here, Y=4). Also, the user terminal can transmit an A/N in response to SF #3 by using SF #7, which is the first UL burst to appear the predetermined period or more later. Note that, when an A/N is transmitted by using a UL burst, the A/N can be transmitted by using an uplink control channel.

In this manner, the user terminal can transmit A/Ns that have not been transmitted yet, among the A/Ns in response to DL subframes located Y ms or more before, by using subframes in UL bursts. In this case, even when no timing for sending A/N feedback in response to DL data in DL bursts is determined in advance, if Y ms passes after DL data is received, A/Ns can be transmitted, in order, by using UL subframes that are configured after that.

By this means, the timing for sending A/N feedback (or the UL subframe to use to send A/N feedback) in response to DL data needs not be determined in advance at the time the DL data is transmitted (at the time the DL subframe is scheduled). In this way, by controlling the timing for sending A/N feedback in a flexible manner, it is possible to configure UL and DL flexibly, depending on listening results and so forth.

Also, given a DL burst period, A/Ns in response to each DL subframe are transmitted by using a UL burst that appears a predetermined period after the DL subframes, so that feedback of A/Ns in response to some of the DL subframes configured in the DL burst period (configured in the first half, for example) can be sent at an early timing. Consequently, the latency in feedback of A/Ns (in particular, A/Ns in response to DL subframes configured in the first half of a DL burst period) can be reduced compared to when A/Ns in response to all DL subframes included in a DL burst period are transmitted together. In particular, it is possible to reduce the latency of A/N feedback effectively when a DL burst period is configured long.

Also, if there is no UL burst Y ms after DL data is received (the location of a DL subframe) in a DL burst period, the user terminal controls A/N feedback by using UL subframes that are configured the DL burst period later. For example, if, following a DL burst period, another DL burst period containing UL bursts (and having a different index) is configured, A/Ns can be transmitted by using UL subframes in the latter DL burst period.

Referring to FIG. 3, no UL burst is present 4 ms after SF #4 and SF #5 in the DL burst period. Therefore, the user terminal sends feedback of A/Ns in response to SF #4 and SF #5 using a UL subframe following the DL burst period. For example, the user terminal may send A/N feedback in response to SF #4 and SF #5 using a UL burst (here, UL subframe #14) that is configured in another DL burst period. In this way, the user terminal can send feedback of A/Ns in response to varying DL subframes (here, SF #0 to SF #3, and SF #4 and SF #5) in the same DL burst by using a UL subframe in a different DL burst period. The user terminal can also send A/N feedback in response to different DL subframes (here, SF #4, SF #5 and SF #10) in different DL bursts by using a UL subframe in one DL burst period.

Furthermore, the user terminal may send A/N feedback in response to DL data transmitted in a DL burst period by using a UL subframe that is configured outside the DL burst period. Nevertheless, although the user terminal can identify UL subframes that are configured in a DL burst period from UL burst information and the like, the user terminal cannot identify UL subframes that are configured outside the DL burst period unless UL transmission is scheduled in these UL subframes.

In FIG. 3, SF #6, SF #7 and SF #14 are UL subframes in DL burst periods, so that even user terminals that are not scheduled in these SFs can recognize these SFs as UL subframes based on UL burst information included in downlink control information (shared control information). On the other hand, when a UL subframe (SF #8) is outside a DL burst period, only user terminals that are commanded UL transmission in this SF #8 can recognize SF #8 as a UL subframe.

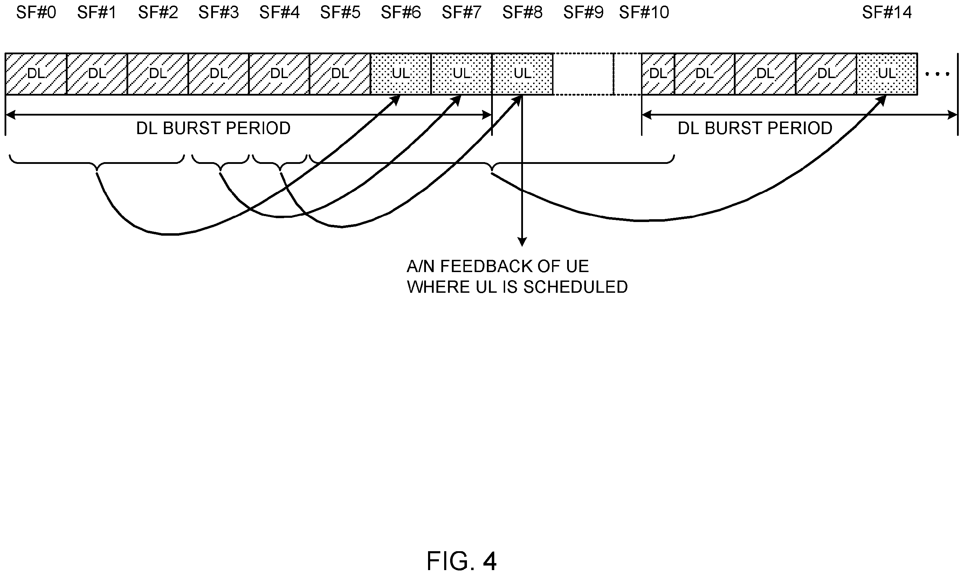

That is, among the user terminals that receive DL data in SF #4, only those user terminals that are scheduled for UL transmission in SF #8 can recognize that SF #8 is a UL subframe, and send A/N feedback in response to the DL data of SF #4 by using SF #8 (see FIG. 4). In SF #8, an A/N may be transmitted by using an uplink shared channel (UCI on PUSCH), or an A/N may be transmitted by using simultaneous transmission of an uplink control channel and an uplink shared channel (PUCCH/PUSCH simultaneous transmission).

Furthermore, cases might occur where UL transmission in response to subframes outside a DL burst period (for example, SF #9 in FIG. 3 and FIG. 4) is commanded by downlink control information addressed to other cells (cross-carrier scheduling). In this case, the user terminal can recognize that SF #9 is a UL subframe, and so that the user terminal may transmit A/Ns in response to DL data transmitted Y ms or more before this SF #9, by using SF #9. In this case, the A/N may be transmitted using an uplink control channel (UCI on PUSCH), or may be transmitted in simultaneous transmission of an uplink control channel and an uplink shared channel (PUCCH/PUSCH simultaneous transmission).

In this way, the user terminal can control A/Ns in response to DL data that is transmitted in a DL burst period to be transmitted in at least one of a UL burst period configured in the DL burst period, UL subframe in which UL transmission is commanded following the DL burst period (or outside the DL burst period), and a UL burst period configured in another DL burst period, depending on the timing the DL data is received.

The timing for A/N feedback in response to DL data is thus controlled without being configured on a fixed basis, so that it is not necessary to determine the timing of feedback at the time a DL grant is transmitted. This makes it possible to configure the UL/DL subframe structure in a flexible manner. Also, by sending feedback of A/Ns in response to DL transmission in a DL burst period by using a UL burst that is provided in this DL burst period, it is possible to shorten the latency of A/N feedback, at least with respect to DL data that is transmitted in the first half of the DL burst period.

### (Second Example)

With a second example of the present invention, an example of the method of controlling the size to apply to transmission of uplink control information (for example, A/Ns) in an unlicensed carrier will be described. The size that is used in A/N transmission is also referred to as "codebook size," "A/N bit sequence," and so on.

When transmitting A/Ns by using an uplink control channel and/or an uplink shared channel in a predetermined subframe (for example, SF #y), the radio base station and a user terminal must have a common understanding of the size of A/Ns (how many bits of A/Ns are going to be transmitted). As mentioned earlier, a user terminal can learn the number of UL subframes included in UL bursts in a DL burst period (DL MCOT) from UL burst information. Also, even outside the DL burst period, the user terminal can identify UL subframes in which UL transmission is scheduled.

Therefore, the present embodiment controls the codebook size of A/Ns in a predetermined subframe by taking into account the range of subframes which a predetermined subframe (SF #y) can cover for A/N transmission and the number of non-DL subframes (for example, the number of UL subframes) in this range of subframes. To be more specific, codebook size is controlled by excluding the number of UL subframes from the range of subframes which the predetermined subframe (SF #y) can cover for A/N transmission. The range of subframes which a predetermined subframe (SF #y) can cover for A/N transmission is also referred to as a "window," a "feedback window," and the like. Now, a method 1 and a method 2 will be described below as examples of methods of determining codebook size.

### <Method 1>

Based on UL burst information and/or UL scheduling information, a user terminal identifies the locations of a predetermined subframe where A/N transmission takes place (for example, SF #y) and a UL subframe that is configured (immediately) before SF #y (for example, SF #x).

In the event the timing for sending A/N feedback is controlled based on a reference value (Y) (for example, 4 ms), SF #x sends feedback of A/Ns in response to DL data that has been transmitted in DL subframes configured the reference value Y or more before (that is, SF #x-4 or before). Meanwhile, SF #y sends feedback of A/Ns in response to DL data that has been transmitted in DL subframes configured the reference value Y or more before (that is, SF #y-4 or before). Therefore, the range of subframes (feedback window) which SF #y can cover for A/N transmission is the range from SF #x-Y+1 (for example, SF #x-3) to SF #y-Y (for example, SF #y-4).

Now, where there are SF #x-Y+1 (for example SF #x-3) to SF #y-Y (for example SF #y-4), assuming that all of the DL subframes are configured, the codebooks size then corresponds to the largest codebook size in SF #y. According to method 1, codebook size is determined by excluding the number of UL subframes reported in UL burst information, from the feedback window.

That is, according to method 1, codebook size is determined based on the locations of two UL subframes, and the number of subframes, which excludes, from a feedback window that is configured based on a reference value, the number of UL subframes (for example, UL bursts) configured in this feedback window. Here, if the number of UL subframes included in the feedback window is q, the number of A/N bits in response to (y-x-q) subframes can be the codebook size. Note that q can be determined based on the number of UL subframes reported in UL burst information. Also, when UL transmission is scheduled outside a DL burst period, the number of these scheduled UL subframes may also be included in q to determine the codebook size.

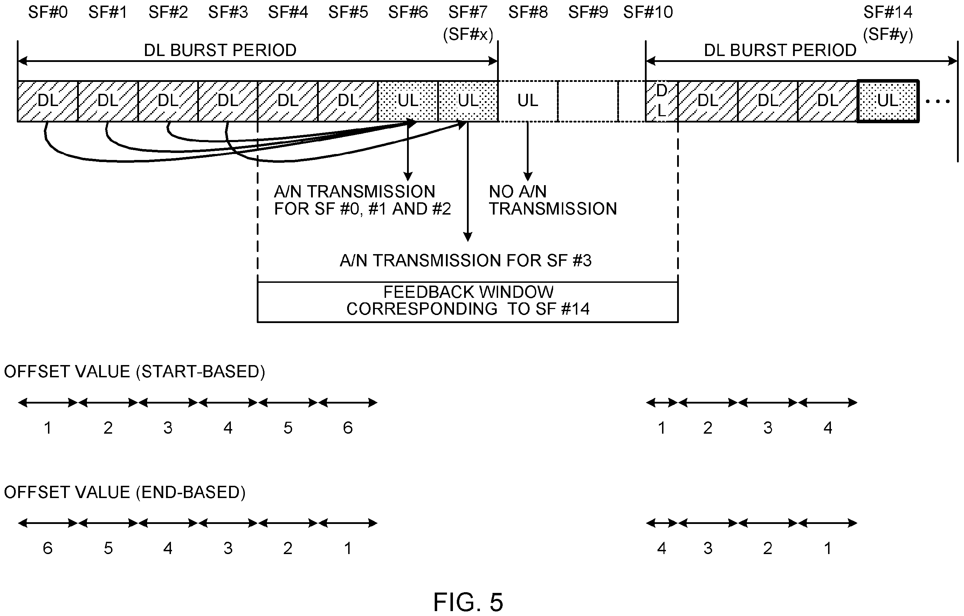

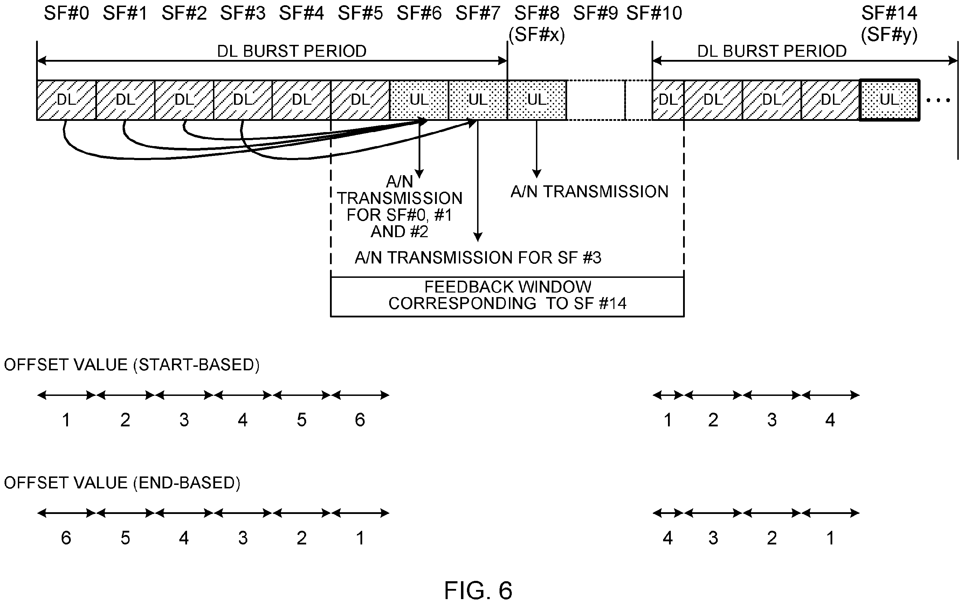

Now, the method of determining the codebook size in SF #14 shown in FIG. 3 and FIG. 4 will be described below with reference to FIG. 5 and FIG. 6.

The user terminal can recognize SF #6, SF #7 and SF #14 as UL subframes based on downlink control information (UL burst information). In this case, SF #14 corresponds to SF #y, SF #7 corresponds to SF #x, and SF #4 to SF #10 correspond to the feedback window for when Y=4 (see FIG. 5). Also, given that SF #6 and SF #7 are the UL subframes included in the feedback window, q=2 holds.

Note that FIG. 5 assumes a case where, in SF #8, no UL transmission is scheduled for the user terminal (and the user terminal therefore cannot recognize SF #8 as a UL subframe). Based on the values of y, x and q, the user terminal can set the number of A/N bits for y-x-q (14-7-2) = five subframes (SFs #4, #5, #8, #9 and #10) as the codebook size.

On the other hand, if UL transmission (for example, PUSCH) is scheduled for the user terminal in SF #8, SF #14 corresponds to SF #y, SF #8 corresponds to SF #x, and SF #5 to SF #10 correspond to the feedback window for when Y=4 (see FIG. 6). Also, given that SF #6, SF #7 and SF #8 are the UL subframes included in the feedback window, q=3 holds. In this case, the user terminal can set the number of A/N bits for y-x-q (14-8-3) = three subframes (SF #5, SF #9 and SF #10) as the codebook size.

In this way, codebook size is determined by excluding the number of UL subframes in the feedback window based on UL burst information, so that it is possible to make the codebook size small. By this means, it is possible to prevent the overhead of uplink control information including A/Ns from increasing.

Note that, although the above description has assumed that the number of transport blocks and the number of CCs are one, when there are a number of transport blocks and a number of CCs, codebook size may be determined by taking into account the number of transport blocks and the number of CCs.

### <Method 2>

According to method 2, codebook size is controlled by taking into account the number of DL subframes (or the number of non-DL subframes) configured in the feedback window. Note that the method of configuring the feedback window and the like can be designed the same as in method 1.

The radio base station reports information related to the number of DL subframes to a user terminal. For example, the radio base station places, in downlink control information (for example, common control information (C-PDCCH)) that is transmitted in a DL burst period, the number of subframes (offset value) from the beginning of DL bursts, and transmits this. When multiple DL subframes are configured in the DL burst period, in each DL subframe, a cumulative offset value is reported to the user terminal.

For example, in FIG. 5 and FIG. 6, offset value 1 is assigned in downlink control information that is transmitted in DL subframe #0 included in a DL burst period, offset value 2 is assigned in downlink control information that is transmitted in DL subframe #1, offset value 6 is assigned in downlink control information that is transmitted in DL subframe #5 and so forth, and these are transmitted to the user terminal. Similarly, offset value 1 is assigned in downlink control information that is transmitted in DL subframe #10 included in another DL burst period, offset value 2 is assigned in downlink control information that is transmitted in DL subframe #11, offset value 4 is assigned in downlink control information that is transmitted in DL subframe #13 and so forth, and these are transmitted to the user terminal.

By this means, even if the user terminal is unable to detect downlink control information in all of the DL subframes configured in a DL burst period (that is, the user terminal fails detection in part of the DL subframes), the user terminal can still know where in the numerical order a subframe in which the user terminal successfully detects downlink control information is located. Furthermore, the user terminal can also identify the location where DL subframes start (for example, the beginning of the DL burst period).

Alternatively, offset values from the end of DL bursts (the last DL subframe in the DL burst period) may be included in downlink control information and reported to the user terminal. In this case, referring back to FIG. 5 and FIG. 6, offset value 6 is assigned in downlink control information that is transmitted in DL subframe #0 included in a DL burst period, offset value 5 is assigned in downlink control information that is transmitted in DL subframe #1, an offset value 1 is assigned in downlink control information that is transmitted in DL subframe #5, and so forth, and these are transmitted to the user terminal. Similarly, offset value 4 is assigned in downlink control information that is transmitted in DL subframe #10 included in another DL burst period, offset value 3 is assigned in downlink control information that is transmitted in DL subframe #11, offset value 1 is assigned in downlink control information that is transmitted in DL subframe #13, and so forth, and these are transmitted to the user terminal.

The radio base station may add offset values from the end of DL bursts, to downlink control information, in addition to offset values from the beginning of DL bursts. The radio base station can also add only offset values from the end of DL bursts, to downlink control information, instead of offset values from the beginning of DL bursts.

By reporting offset values from the beginning of DL bursts and offset values from the end of DL bursts to the user terminal, even when the user terminal fails to detect the last DL subframe in a DL burst period, the user terminal can still recognize this failed detection. For example, if a DL burst period, in which no UL burst is included (and which is therefore also referred to as a "DL-only burst"), is configured between SF #y and SF #x, even if the user terminal cannot detect downlink control information in the last subframe of the DL burst period, the user terminal can still recognize this failed detection from the offset value.

Also, the radio base station may include information about the total number (total) of DL subframes scheduled in a DL burst period, in addition to offset values from the beginning of DL bursts and/or offset values from the end of DL bursts, in downlink control information.

The user terminal can determine the number of DL subframes (or the number of non-DL subframes) included in the feedback window based on offset values from the beginning of DL bursts and/or offset values from the end of DL bursts. For example, assuming that the number of non-DL subframes in the feedback window is p, the user terminal can set the number of A/N bits in response to (y-x-p) subframes as the codebook size in a predetermined subframe (SF #y).

Now, the method of determining the codebook size in SF #14 shown in FIG. 3 and FIG. 4 will be described below with reference to FIG. 5 and FIG. 6.

The user terminal can recognize SF #6, SF #7 and SF #14 as UL subframes based on downlink control information. Also, based on offset values contained in downlink control information that is transmitted in DL burst periods, the user terminal can recognize that the DL burst period to include SF #14 starts from SF #10. Similarly, based on offset values, the user terminal can recognize that DL bursts start from SF #0 (and end with SF #5) in another DL burst period.

In this case, SF #14 corresponds to SF #y, SF #7 corresponds to SF #x, and SF #4 to SF #10 correspond to the feedback window for when Y=4 (see FIG. 5). Also, given that SFs #6, #7, #8 and #9 are the non-DL subframes included in the feedback window, p=4 holds.

Note that FIG. 5 assumes a case where, in SF #8, no UL transmission is scheduled for the user terminal (and the user terminal therefore cannot recognize SF #8 as a UL subframe). Based on the values of y, x and p, the user terminal can set the number of A/N bits for y-x-p (14-7-4) = three subframes (SFs #4, #5, and #10) as the codebook size.

On the other hand, if UL transmission (for example, PUSCH) is scheduled for the user terminal in SF #8, SF #14 corresponds to SF #y, SF #8 corresponds to SF #x, and SF #5 to SF #10 correspond to the feedback window for when Y=4 (see

FIG. 6). Also, given that SFs #6, #7, #8 and #9 are the non-DL subframes included in the feedback window, p=4 holds. In this case, the user terminal can set the number of A/N bits for y-x-q (14-8-4) = two subframes (SF #5 and SF #10) as the codebook size.

In this way, codebook size is determined by taking into account the number of DL subframes in a DL burst period (by excluding the number of non-DL subframes), so that it is possible to make the codebook size small. In particular, by taking the number of DL subframes (the number of non-DL subframes) into account, codebook size can be determined so that subframes (for example, SF #9 in FIG. 5 and FIG. 6) outside DL burst periods are excluded. By this means, it is possible to prevent the overhead of uplink control information including A/Ns from increasing.

Note that, although the above description has assumed that the number of transport blocks and the number of CCs are one, when there are a number of transport blocks and a number of CCs, codebook size may be determined by taking into account the number of transport blocks and the number of CCs.

### (Radio Communication System)

Now, the structure of a radio communication system according to the present embodiment will be described below. In this radio communication system, the radio communication methods according to the above-described embodiments are employed. Note that the radio communication method according to each embodiment described above may be used alone or may be used in combination.

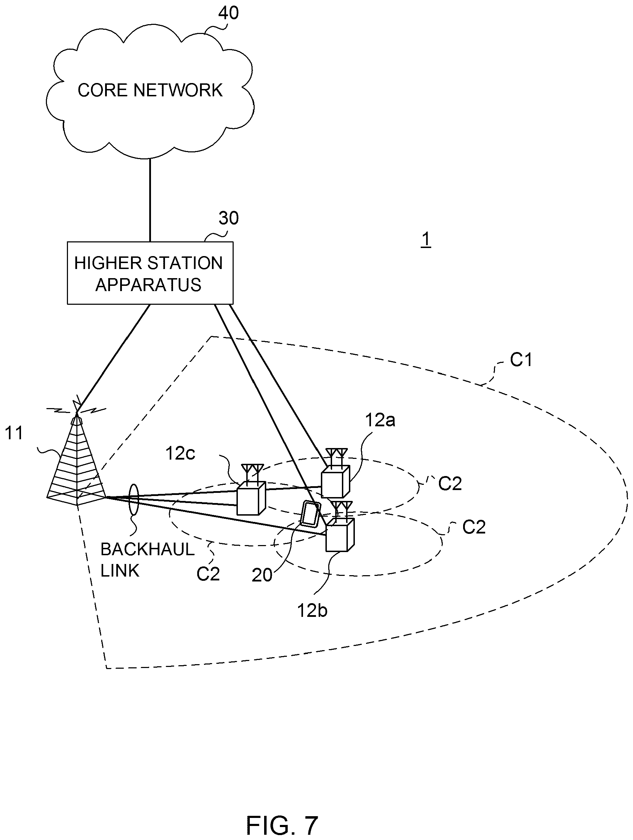

FIG. 7 is a diagram to show an example of a schematic structure of a radio communication system according to an embodiment of the present invention. A radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit. Note that the radio communication system 1 may be referred to as "SUPER 3G," "LTE-A (LTE-Advanced)," "IMT-Advanced," "4G," "5G," "FRA (Future Radio Access)," "NR (New RAT)" and so on.

The radio communication system 1 shown in FIG. 7 includes a radio base station 11 that forms a macro cell C1, and radio base stations 12a to 12c that are placed within the macro cell C1 and that form small cells C2, which are narrower than the macro cell C1. Also, user terminals 20 are placed in the macro cell C1 and in each small cell C2. A configuration in which different numerologies are applied between cells may be adopted here. Note that a "numerology" refers to a set of communication parameters that characterize the design of signals in a given RAT and the design of the RAT.

The user terminals 20 can connect with both the radio base station 11 and the radio base stations 12. The user terminals 20 may use the macro cell C1 and the small cells C2, which use different frequencies, at the same time, by means of CA or DC. Also, the user terminals 20 can execute CA or DC by using a plurality of cells (CCs) (for example, two or more CCs). Furthermore, the user terminals can use licensed-band CCs and unlicensed-band CCs as a plurality of cells. Note that a configuration may be employed here in which TDD carriers to use shortened TTIs are included in some of these cells.

Between user terminals 20 and the radio base station 11, communication can be carried out using a carrier of a relatively low frequency band (for example, 2 GHz) and a narrow bandwidth (referred to as, for example, an "existing carrier," a "legacy carrier," and so on). Meanwhile, between the user terminals 20 and the radio base stations 12, a carrier of a relatively high frequency band (for example, 3.5 GHz, 5 GHz, 30 to 70 GHz and so on) and a wide bandwidth may be used, or the same carrier as that used in the radio base station 11 may be used. Note that frequency bands that are used in each radio base station are by no means limited to these structures.

A configuration may be employed here, in which the radio base station 11 and the radio base station 12 (or two radio base stations 12) are connected by cables (for example, by optical fiber in compliance with CPRI (Common Public Radio Interface), the X2 interface and so on), or connected by radio.

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point" and so on. Also, the radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter the radio base stations 11 and 12 will be collectively referred to as "radio base stations 10," unless specified otherwise.

The user terminals 20 are terminals to support various communication schemes such as LTE, LTE-A and so on, and may be either mobile communication terminals or stationary communication terminals.

In the radio communication system 1, as radio access schemes, OFDMA (orthogonal Frequency Division Multiple Access) can be applied to the downlink (DL), and SC-FDMA (Single-Carrier Frequency Division Multiple Access) can be applied to the uplink (UL). OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are not limited to the combination of these, and OFDMA may be used in the UL.

In the radio communication system 1, a DL data channel (PDSCH (Physical Downlink Shared CHannel), which is also referred to as, for example, a "DL shared channel"), which is shared by each user terminal 20, a broadcast channel (PBCH (Physical Broadcast CHannel)), L1/L2 control channels and so on are used as DL channels. User data, higher layer control information, SIBs (System Information Blocks) and so on are communicated in the PDSCH. Also, the MIB (Master Information Block) is communicated in the PBCH.

The L1/L2 control channels include DL control channels (PDCCH (Physical Downlink Control CHannel), EPDCCH (Enhanced Physical Downlink Control CHannel), and/or other channels), a PCFICH (Physical Control Format Indicator CHannel), a PHICH (Physical Hybrid-ARQ Indicator CHannel) and so on. Downlink control information (DCI), including PDSCH and PUSCH scheduling information, is communicated by the PDCCH. The number of OFDM symbols to use for the PDCCH is communicated by the PCFICH. HARQ delivery acknowledgement information (ACK/NACK) in response to the PUSCH is communicated by the PHICH. The EPDCCH is frequency-division-multiplexed with the PDSCH (downlink shared data channel) and used to communicate DCI and so on, like the PDCCH.

In the radio communication system 1, a UL data channel (PUSCH (Physical Uplink Shared CHannel), which is also referred to as "UL shared channel" and so on), which is shared by each user terminal 20, a UL control channel (PUCCH (Physical Uplink Control CHannel)), a random access channel (PRACH (Physical Random Access CHannel)) and so on are used as UL channels. User data, higher layer control information and so on are communicated by the PUSCH. Uplink control information (UCI), including at least one of delivery acknowledgment information (ACK/NACK), radio quality information (CQI) and so on, is transmitted by the PUSCH or the PUCCH. By means of the PRACH, random access preambles for establishing connections with cells are communicated.

### (Radio Base Station)

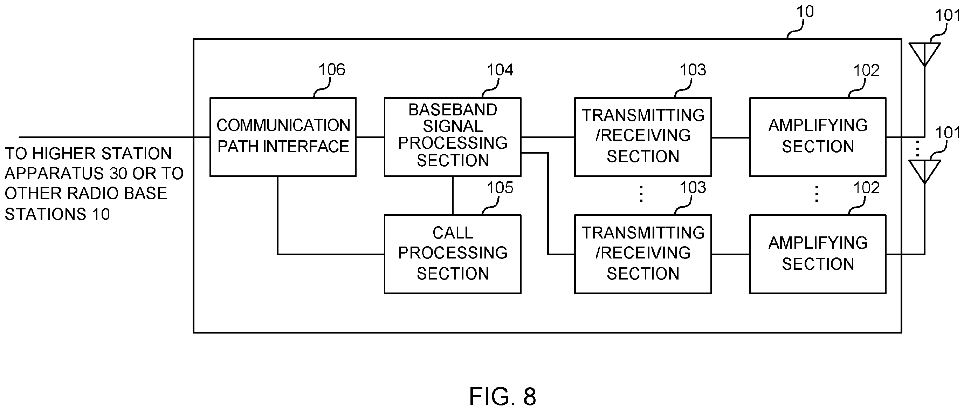

FIG. 8 is a diagram to show an example of an overall structure of a radio base station according to the present embodiment. A radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

DL data to be transmitted from the radio base station 10 to a user terminal 20 is input from the higher station apparatus 30 to the baseband signal processing section 104, via the communication path interface 106.

In the baseband signal processing section 104, the DL data is subjected to a PDCP (Packet Data Convergence Protocol) layer process, user data division and coupling, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to the transmitting/receiving sections 103. Furthermore, DL control signals are also subjected to transmission processes such as channel coding and an inverse fast Fourier transform, and forwarded to the transmitting/receiving sections 103.

Baseband signals that are precoded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted by transmitters/receivers, transmitting/receiving circuits or transmitting/receiving apparatus that can be described based on general understanding of the technical field to which the present invention pertains. Note that a transmitting/receiving section 103 may be structured as a transmitting/receiving section in one entity, or may be constituted by a transmitting section and a receiving section.

Meanwhile, as for UL signals, radio frequency signals that are received in the transmitting/receiving antennas 101 are amplified in the amplifying sections 102. The transmitting/receiving sections 103 receive the UL signals amplified in the amplifying sections 102. The received signals are converted into the baseband signal through frequency conversion in the transmitting/receiving sections 103 and output to the baseband signal processing section 104.

In the baseband signal processing section 104, user data that is included in the UL signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing such as setting up and releasing communication channels, manages the state of the radio base station 10 and manages radio resources.

The communication path interface section 106 transmits and receives signals to and from the higher station apparatus 30 via a predetermined interface. Also, the communication path interface 106 may transmit and receive signals (backhaul signaling) with other radio base stations 10 via an inter-base station interface (which is, for example, optical fiber that is in compliance with the CPRI (Common Public Radio Interface), the X2 interface, etc.).

Note that the transmitting/receiving sections 103 transmit DL signals (for example, DL control signals (DL control channels), DL data signals (DL data channels, DL shared channels and so on), DL reference signals (DM-RS, CSI-RS and so on), discovery signals, synchronization signals, broadcast signals and so on), and receive UL signals (for example, UL control signals (UL control channels), UL data signals (UL data channels, UL shared channels and so on), UL reference signals and so on).

To be more specific, the transmitting/receiving sections 103 transmit at least one of UL burst information, DL burst information, and information about the locations of DL subframes in DL bursts (offset values from the beginning and/or end of DL bursts), to the user terminal 20. The transmitting/receiving sections 103 receive uplink control information such as A/Ns transmitted from the user terminal 20. The transmitting/receiving sections of the present invention are constituted by a transmitting/receiving section 103 and/or a communication path interface 106.

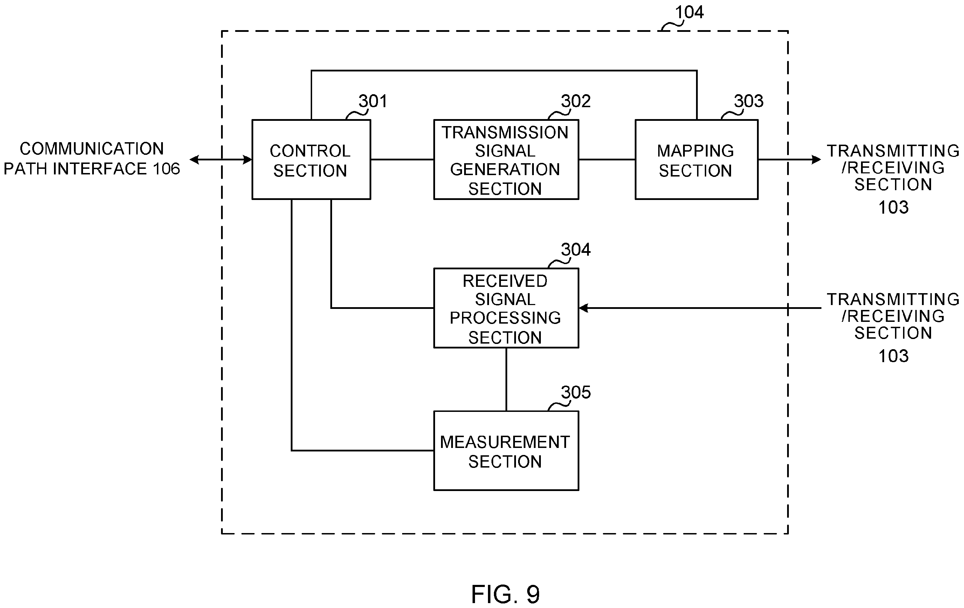

FIG. 9 is a diagram to show an exemplary functional structure of a radio base station according to the present embodiment. Note that, although FIG. 9 primarily shows functional blocks that pertain to characteristic parts of the present embodiment, the radio base station 10 has other functional blocks that are necessary for radio communication as well. As shown in FIG. 9, the baseband signal processing section 104 at least has a control section 301, a transmission signal generation section 302, a mapping section 303, a received signal processing section 304 and a measurement section 305.

The control section 301 controls the whole of the radio base station 10. The control section 301 can be constituted by a controller, a control circuit or control apparatus that can be described based on general understanding of the technical field to which the present invention pertains.

The control section 301, for example, controls generation of signals in the transmission signal generation section 302, allocation of signals in the mapping section 303, and so on. Furthermore, the control section 301 controls signal receiving processes in the received signal processing section 304, measurements of signals in the measurement section 305, and so on.

The control section 301 controls scheduling (for example, resource allocation) of DL signals and/or UL signals. To be more specific, the control section 301 controls the transmission signal generation section 302, the mapping section 303 and the transmitting/receiving sections 103 to generate and transmit DCI (DL assignments, DL grants, etc.) that includes DL data channel scheduling information, and DCI (UL grants) that includes UL data channel scheduling information.

The transmission signal generation section 302 generates DL signals (DL control channels, DL data channels, DL reference signals such as DM-RSs, and so on) as commanded from the control section 301, and outputs the DL signals to the mapping section 303. The transmission signal generation section 302 can be constituted by a signal generator, a signal generating circuit or signal generating apparatus that can be described based on general understanding of the technical field to which the present invention pertains.

The mapping section 303 maps the DL signals generated in the transmission signal generation section 302 to predetermined radio resources, as commanded from the control section 301, and outputs these to the transmitting/receiving sections 103. The mapping section 303 can be constituted by a mapper, a mapping circuit or mapping apparatus that can be described based on general understanding of the technical field to which the present invention pertains.

The received signal processing section 304 performs receiving processes (for example, demapping, demodulation, decoding and so on) for received signals that are input from the transmitting/receiving sections 103. Here, the received signals are, for example, UL signals transmitted from the user terminal 20 (UL control channels, UL data channels, UL reference signals and so on). For the received signal processing section 304, a signal processor, a signal processing circuit or signal processing apparatus that can be described based on general understanding of the technical field to which the present invention pertains can be used.

The received signal processing section 304 outputs the decoded information, acquired through the receiving processes, to the control section 301. For example, the received signal processing section 304 outputs at least one of a preamble, control information and UL data, to the control section 301. Also, the received signal processing section 304 outputs the received signals, the signals after the receiving processes and so on, to the measurement section 305.

The measurement section 305 conducts measurements with respect to the received signal. The measurement section 305 can be constituted by a measurer, a measurement circuit or measurement apparatus that can be described based on general understanding of the technical field to which the present invention pertains.

The measurement section 305 may measure the received signals' received power (for example, RSRP (Reference Signal Received Power)), received quality (for example, RSRQ (Reference Signal Received Quality)), channel states and so on. The measurement results may be output to the control section 301.

### (User Terminal)

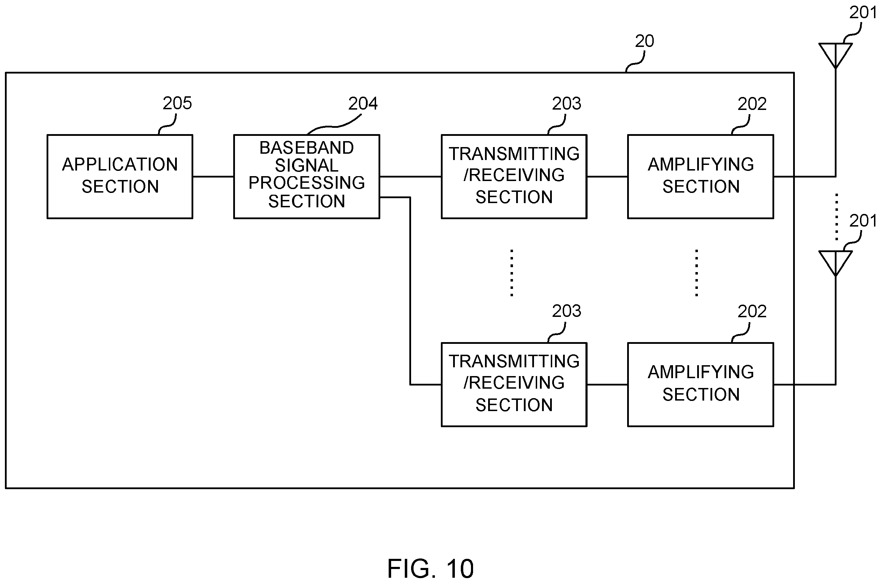

FIG. 10 is a diagram to show an example of an overall structure of a user terminal according to the present embodiment. A user terminal 20 has a plurality of transmitting/receiving antennas 201, amplifying sections 202, transmitting/receiving sections 203, a baseband signal processing section 204 and an application section 205. Note that one or more transmitting/receiving antennas 201, amplifying sections 202 and transmitting/receiving sections 203 may be provided.

Radio frequency signals that are received in the transmitting/receiving antennas 201 are amplified in the amplifying sections 202. The transmitting/receiving sections 203 receive the DL signals amplified in the amplifying sections 202. The received signals are subjected to frequency conversion and converted into the baseband signal in the transmitting/receiving sections 203, and output to the baseband signal processing section 204. A transmitting/receiving section 203 can be constituted by a transmitters/receiver, a transmitting/receiving circuit or transmitting/receiving apparatus that can be described based on general understanding of the technical field to which the present invention pertains. Note that a transmitting/receiving section 203 may be structured as a transmitting/receiving section in one entity, or may be constituted by a transmitting section and a receiving section.

In the baseband signal processing section 204, the baseband signal that is input is subjected to an FFT process, error correction decoding, a retransmission control receiving process and so on. The DL data is forwarded to the application section 205. The application section 205 performs processes related to higher layers above the physical layer and the MAC layer and so on. Also, in the DL data, system information and higher layer control information are also forwarded to the application section 205.

Meanwhile, UL data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving sections 203. Baseband signals that are output from the baseband signal processing section 204 are converted into a radio frequency band in the transmitting/receiving sections 203 and transmitted. The radio frequency signals that are subjected to frequency conversion in the transmitting/receiving sections 203 are amplified in the amplifying sections 202, and transmitted from the transmitting/receiving antennas 201.

Note that the transmitting/receiving sections 203 receive DL signals (for example, DL control signals (DL control channels), DL data signals (DL data channels, DL shared channels and so on), DL reference signals (DM-RS, CSI-RS and so on), discovery signals, synchronization signals, broadcast signals and so on), and transmit UL signals (for example, UL control signals (UL control channels), UL data signals (UL data channels, UL shared channels and so on), UL reference signals and so on).

To be more specific, the transmitting/receiving sections 203 receive at least one of UL burst information, DL burst information, and information about the locations of DL subframes in DL bursts (offset values from the beginning and/or end of DL bursts). The transmitting/receiving sections 203 transmit uplink control information such as A/Ns.

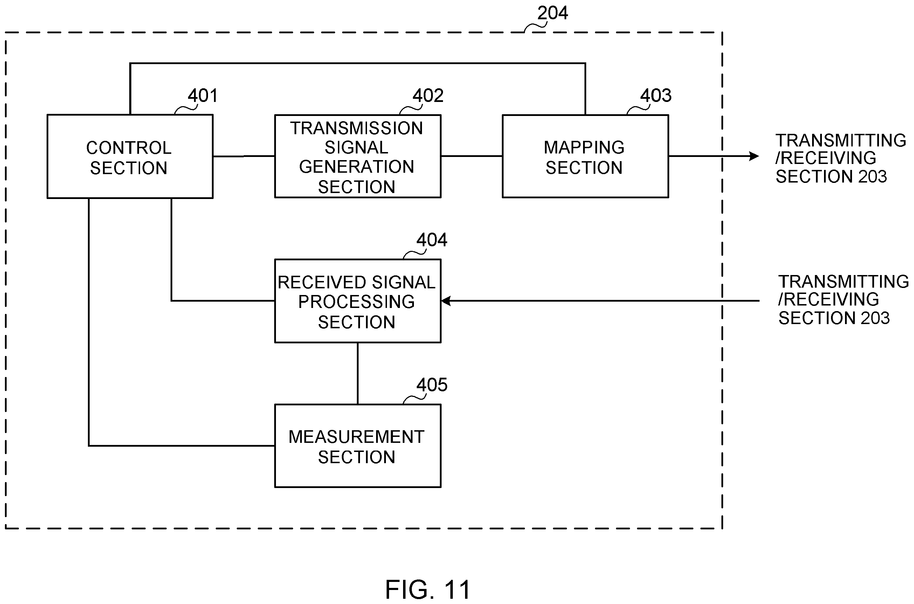

FIG. 11 is a diagram to show an exemplary functional structure of a user terminal according to the present embodiment. Note that, although FIG. 11 primarily shows functional blocks that pertain to characteristic parts of the present embodiment, the user terminal 20 has other functional blocks that are necessary for radio communication as well. As shown in FIG. 11, the baseband signal processing section 204 provided in the user terminal 20 at least has a control section 401, a transmission signal generation section 402, a mapping section 403, a received signal processing section 404 and a measurement section 405.

The control section 401 controls the whole of the user terminal 20. For the control section 401, a controller, a control circuit or control apparatus that can be described based on general understanding of the technical field to which the present invention pertains can be used.

The control section 401 controls, for example, generation of signals in the transmission signal generation section 402, allocation of signals in the mapping section 403, and so on. Furthermore, the control section 401 controls signal receiving processes in the received signal processing section 404, measurements of signals in the measurement section 405, and so on.

The control section 401 controls UL transmission based on results of UL listening, which is executed before UL transmission. Also, when a UL burst is configured in a DL burst period, the control section 401 exerts control so that A/Ns in response to downlink data are transmitted by using at least one of the UL burst, a UL transmission period, which is configured outside the DL burst period, and in which UL transmission is commanded, and a UL burst, which is configured in another DL burst period following the present DL burst period, based on the timing the downlink data is received (see FIG. 3 and FIG. 4).

In addition, the control section 401 can control transmission of A/Ns in a UL transmission period, based on UL transmission commands included in downlink control information that is transmitted in a DL burst period.

In addition, the control section 401 controls the codebook size to apply to transmission of A/Ns based on the location of the first subframe in which A/Ns are transmitted, the location of a second subframe in which A/Ns are transmitted before the first subframe, and the number of non-DL subframes included in a predetermined period (a feedback window corresponding to the first subframe) that is configured based on the reference value for the timing for A/N feedback (see FIG. 5 and FIG. 6).

The transmission signal generation section 402 generates UL signals (UL control channels, UL data signals, UL reference signals and so on) as commanded from the control section 401, and outputs these signals to the mapping section 403. The transmission signal generation section 402 can be constituted by a signal generator, a signal generating circuit or signal generating apparatus that can be described based on general understanding of the technical field to which the present invention pertains.

Also, the transmission signal generation section 402 generates UL data channels as commanded by the control section 401. For example, when a UL grant is included in a DL control channel that is reported from the radio base station 10, the control section 401 commands the transmission signal generation section 402 to generate a UL data channel.

The mapping section 403 maps the UL signals generated in the transmission signal generation section 402 to radio resources as commanded from the control section 401, and output the result to the transmitting/receiving sections 203. The mapping section 403 can be constituted by a mapper, a mapping circuit or mapping apparatus that can be described based on general understanding of the technical field to which the present invention pertains.

The received signal processing section 404 performs receiving processes (for example, demapping, demodulation, decoding and so on) for received signals that are input from the transmitting/receiving sections 203. Here, the received signals include, for example, DL signals transmitted from the radio base station 10 (DL control channels, DL data channels, DL reference signals and so on). The received signal processing section 404 can be constituted by a signal processor, a signal processing circuit or signal processing apparatus that can be described based on general understanding of the technical field to which the present invention pertains. Also, the received signal processing section 404 can constitute the receiving section according to the present invention.

Based on commands from control section 401, the received signal processing section 404 performs blind decoding of a DL control channel, which schedules transmission and/or receipt of a DL data channel, and performs receiving processes for the DL data channel based on this DCI. In addition, the received signal processing section 404 estimates channel gain based on the DM-RS or the CRS, and demodulates the DL data channel based on the estimated channel gain.

The received signal processing section 404 outputs the decoded information, acquired through the receiving processes, to the control section 401. The received signal processing section 404 outputs, for example, broadcast information, system information, RRC signaling, DCI and so on, to the control section 401. The received signal processing section 404 may output the decoding result of data to the control section 401. Also, the received signal processing section 404 outputs the received signals, the signals after the receiving processes and so on, to the measurement section 405.

The measurement section 405 conducts measurements with respect to the received signals. The measurement section 405 can be constituted by a measurer, a measurement circuit or measurement apparatus that can be described based on general understanding of the technical field to which the present invention pertains.

The measurement section 405 may measure, for example, the received signals' received power (for example, RSRP), DL received quality (for example, RSRQ) and so on. The measurement results may be output to the control section 401.

### (Hardware Structure)

Note that the block diagrams that have been used to describe the above embodiments show blocks in functional units. These functional blocks (components) may be implemented in arbitrary combinations of hardware and/or software. Also, the means for implementing each functional block is not particularly limited. That is, each functional block may be realized by one piece of apparatus that is physically and/or logically aggregated, or may be realized by directly and/or indirectly connecting two or more physically and/or logically separate pieces of apparatus (via wire and/or wireless, for example) and using these multiple pieces of apparatus.

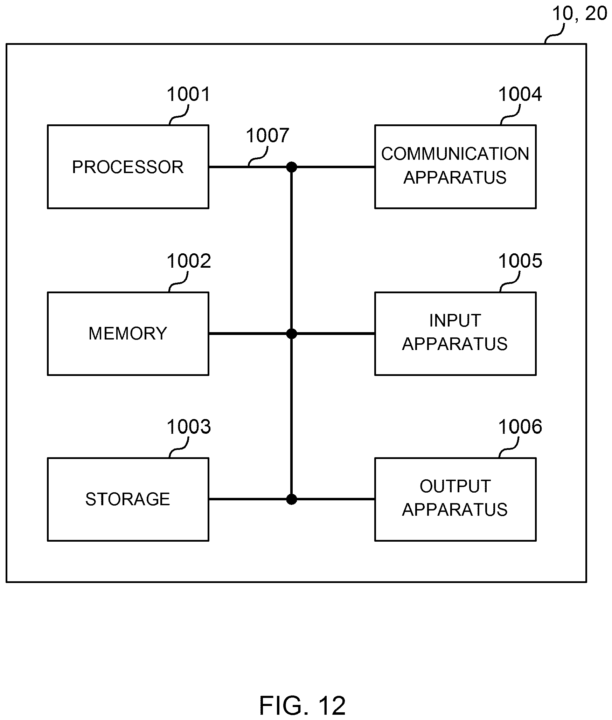

For example, the radio base station, user terminals and so on according to an embodiment of the present invention may function as a computer that executes the processes of the radio communication method of the present invention. FIG. 12 is a diagram to show an exemplary hardware structure of a radio base station and a user terminal according to an embodiment of the present invention. Physically, the above-described radio base stations 10 and user terminals 20 may be formed as computer apparatus that includes a processor 1001, a memory 1002, a storage 1003, communication apparatus 1004, input apparatus 1005, output apparatus 1006, a bus 1007 and so on.

Note that, in the following description, the word "apparatus" may be replaced by "circuit," "device," "unit" and so on. Note that the hardware structure of a radio base station 10 and a user terminal 20 may be designed to include one or more of each apparatus shown in the drawings, or may be designed not to include part of the apparatus.

For example, although only one processor 1001 is shown, a plurality of processors may be provided. Furthermore, processes may be implemented with one processor, or processes may be implemented either simultaneously or in sequence, or in different manners, on two or more processors. Note that the processor 1001 may be implemented with one or more chips.

Each function of the radio base station 10 and user terminal 20 is implemented by allowing predetermined software (programs) to be read on hardware such as the processor 1001 and the memory 1002, and by allowing the processor 1001 to do calculations, the communication apparatus 1004 to communicate, and the memory 1002 and the storage 1003 to read and/or write data.

The processor 1001 may control the whole computer by, for example, running an operating system. The processor 1001 may be configured with a central processing unit (CPU), which includes interfaces with peripheral apparatus, control apparatus, computing apparatus, a register and so on. For example, the above-described baseband signal processing section 104 (204), call processing section 105 and so on may be implemented by the processor 1001.

Furthermore, the processor 1001 reads programs (program codes), software modules or data, from the storage 1003 and/or the communication apparatus 1004, into the memory 1002, and executes various processes according to these. As for the programs, programs to allow computers to execute at least part of the operations of the above-described embodiments may be used. For example, the control section 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory) and/or other appropriate storage media. The memory 1002 may be referred to as a "register," a "cache," a "main memory" (primary storage apparatus) and so on. The memory 1002 can store executable programs (program codes), software modules and so on for implementing the radio communication methods according to embodiments of the present invention.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving apparatus) for allowing inter-computer communication by using wired and/or wireless networks, and may be referred to as, for example, a "network device," a "network controller," a "network card," a "communication module" and so on. The communication apparatus 1004 may be configured to include a high frequency switch, a duplexer, a filter, a frequency synthesizer and so on in order to realize, for example, frequency division duplex (FDD) and/or time division duplex (TDD). For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from the outside (for example, a keyboard, a mouse, a microphone, a switch, a button, a sensor and so on). The output apparatus 1006 is an output device for allowing sending output to the outside (for example, a display, a speaker, an LED (Light Emitting Diode) lamp and so on). Note that the input apparatus 1005 and the output apparatus 1006 may be provided in an integrated structure (for example, a touch panel).

Furthermore, these pieces of apparatus, including the processor 1001, the memory 1002 and others, are connected by a bus 1007 for communicating information. The bus 1007 may be formed with a single bus, or may be formed with buses that vary between pieces of apparatus.

Also, the radio base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one of these pieces of hardware.

### (Variations)

Note that the terminology used in this specification and the terminology that is needed to understand this specification may be replaced by other terms that convey the same or similar meanings. For example, "channels" and/or "symbols" may be replaced by "signals (or "signaling")." Also, "signals" may be "messages." A reference signal may be abbreviated as an "RS," and may be referred to as a "pilot," a "pilot signal" and so on, depending on which standard applies. Furthermore, a "component carrier (CC)" may be referred to as a "cell," a "frequency carrier," a "carrier frequency" and so on.

Furthermore, a radio frame may be comprised of one or more periods (frames) in the time domain. Each of one or more periods (frames) constituting a radio frame may be referred to as a "subframe." Furthermore, a subframe may be comprised of one or more slots in the time domain. Furthermore, a slot may be comprised of one or more symbols in the time domain (OFDM (Orthogonal Frequency Division Multiplexing) symbols, SC-FDMA (Single Carrier Frequency Division Multiple Access) symbols, and so on).

A radio frame, a subframe, a slot and a symbol all represent the time unit in signal communication. A radio frame, a subframe, a slot and a symbol may be each called by other applicable names. For example, one subframe may be referred to as a "transmission time interval (TTI)," or a plurality of consecutive subframes may be referred to as a "TTI," and one slot may be referred to as a "TTI." That is, a subframe and a TTI may be a subframe (1 ms) in existing LTE, may have a shorter period than 1 ms (for example, one to thirteen symbols), or may have a longer period than 1 ms.

Here, a TTI refers to the minimum time unit of scheduling in radio communication, for example. For example, in LTE systems, a radio base station schedules radio resources (such as the frequency bandwidth and transmission power that can be used in each user terminal) to allocate to each user terminal in TTI units. Note that the definition of TTIs is not limited to this. TTIs may be the time unit for transmitting channel-encoded data packets (transport blocks), or may be the unit of processing in scheduling, link adaptation and so on.

A TTI having a time duration of 1 ms may be referred to as a "normal TTI" (TTI in LTE Rel. 8 to 12), a "long TTI," a "normal subframe," a "long subframe," and so on. A TTI that is shorter than a normal TTI may be referred to as a "shortened TTI," a "short TTI," a "shortened subframe," a "short subframe," and so on.

A resource block (RB) is the unit of resource allocation in the time domain and the frequency domain, and may include one or a plurality of consecutive subcarriers in the frequency domain. Also, an RB may include one or more symbols in the time domain, and may be one slot, one subframe or one TTI in length. One TTI and one subframe each may be comprised of one or more resource blocks. Note that an RB may be referred to as a "physical resource block (PRB (Physical RB))," a "PRB pair," an "RB pair," and so on.

Furthermore, a resource block may be comprised of one or more resource elements (REs). For example, one RE may be a radio resource field of one subcarrier and one symbol.

Note that the above-described structures of radio frames, subframes, slots, symbols and so on are simply examples. For example, configurations such as the number of subframes included in a radio frame, the number of slots included in a subframe, the number of symbols and RBs included in a slot, the number of subcarriers included in an RB, the number of symbols in a TTI, the symbol duration and the cyclic prefix (CP) duration can be variously changed.

Also, the information and parameters described in this specification may be represented in absolute values or in relative values with respect to predetermined values, or may be represented in other applicable formats of information. For example, radio resources may be specified by predetermined indices. In addition, equations to use these parameters and so on may be used, apart from those explicitly disclosed in this specification.

The names used for parameters and so on in this specification are in no respect limiting. For example, since various channels (PUCCH (Physical Uplink Control Channel), PDCCH (Physical Downlink Control Channel) and so on) and information elements can be identified by any suitable names, the various names assigned to these individual channels and information elements are in no respect limiting.

The information, signals and/or others described in this specification may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Also, information, signals and so on can be output from higher layers to lower layers and/or from lower layers to higher layers. Information, signals and so on may be input and/or output via a plurality of network nodes.

The information, signals and so on that are input and/or output may be stored in a specific location (for example, a memory), or may be managed using a management table. The information, signals and so on to be input and/or output can be overwritten, updated or appended. The information, signals and so on that are output may be deleted. The information, signals and so on that are input may be transmitted to other pieces of apparatus.

Reporting of information is by no means limited to the aspects/embodiments described in this specification, and other methods may be used as well. For example, reporting of information may be implemented by using physical layer signaling (for example, downlink control information (DCI), uplink control information (UCI)), higher layer signaling (for example, RRC (Radio Resource Control) signaling, broadcast information (master information block (MIB), system information blocks (SIBs) and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)" and so on. Also, RRC signaling may be referred to as "RRC messages," and can be, for example, an RRC connection setup message, RRC connection reconfiguration message, and so on. Also, MAC signaling may be reported using, for example, MAC control elements (MAC CEs (Control Elements)).

Also, reporting of predetermined information (for example, reporting of information to the effect that "X holds") does not necessarily have to be sent explicitly, and can be sent implicitly (by, for example, not reporting this piece of information, or by reporting a different piece of information).

Decisions may be made in values represented by one bit (0 or 1), may be made in Boolean values that represent true or false, or may be made by comparing numerical values (for example, comparison against a predetermined value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server or other remote sources by using wired technologies (coaxial cables, optical fiber cables, twisted-pair cables, digital subscriber lines (DSL) and so on) and/or wireless technologies (infrared radiation, microwaves and so on), these wired technologies and/or wireless technologies are also included in the definition of communication media.

The terms "system" and "network" as used herein are used interchangeably.

As used herein, the terms "base station (BS)," "radio base station," "eNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or more (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads)). The term "cell" or "sector" refers to part or all of the coverage area of a base station and/or a base station subsystem that provides communication services within this coverage.

As used herein, the terms "mobile station (MS)" "user terminal," "user equipment (UE)" and "terminal" may be used interchangeably. A base station may be referred to as a "fixed station," "NodeB," "eNodeB (eNB)," "access point," "transmission point," "receiving point," "femto cell," "small cell" and so on.

A mobile station may be referred to, by a person skilled in the art, as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client" or some other suitable terms.

Furthermore, the radio base stations in this specification may be interpreted as user terminals. For example, each aspect/embodiment of the present invention may be applied to a structure in which communication between a radio base station and a user terminal is replaced with communication among a plurality of user terminals (D2D (Device-to-Device)). In this case, user terminals 20 may have the functions of the radio base stations 10 described above. In addition, wording such as "uplink" and "downlink" may be interpreted as "side." For example, an uplink channel may be interpreted as a side channel.

Likewise, the user terminals in this specification may be interpreted as radio base stations. In this case, the radio base stations 10 may have the functions of the user terminals 20 described above.

Certain actions which have been described in this specification to be performed by base stations may, in some cases, be performed by higher nodes (upper nodes). In a network comprised of one or more network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The aspects/embodiments illustrated in this specification may be used individually or in combinations, which may be switched depending on the mode of implementation. The order of processes, sequences, flowcharts and so on that have been used to describe the aspects/embodiments herein may be re-ordered as long as inconsistencies do not arise. For example, although various methods have been illustrated in this specification with various components of steps in exemplary orders, the specific orders that are illustrated herein are by no means limiting.

The aspects/embodiments illustrated in this specification may be applied to systems that use LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark) and other adequate radio communication methods, and/or next-generation systems that are enhanced based on these.

The phrase "based on" as used in this specification does not mean "based only on," unless otherwise specified. In other words, the phrase "based on" means both "based only on" and "based at least on."

Reference to elements with designations such as "first," "second" and so on as used herein does not generally limit the number/quantity or order of these elements. These designations are used only for convenience, as a method of distinguishing between two or more elements. In this way, reference to the first and second elements does not imply that only two elements may be employed, or that the first element must precede the second element in some way.

The terms "judge" and "determine" as used herein may encompass a wide variety of actions. For example, to "judge" and "determine" as used herein may be interpreted to mean making judgements and determinations related to calculating, computing, processing, deriving, investigating, looking up (for example, searching a table, a database or some other data structure), ascertaining and so on. Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on. In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

As used herein, the terms "connected" and "coupled," or any variation of these terms, mean all direct or indirect connections or coupling between two or more elements, and may include the presence of one or more intermediate elements between two elements that are "connected" or "coupled" to each other. The coupling or connection between the elements may be physical, logical or a combination thereof. As used herein, two elements may be considered "connected" or "coupled" to each other by using one or more electrical wires, cables and/or printed electrical connections, and, as a number of non-limiting and non-inclusive examples, by using electromagnetic energy, such as electromagnetic energy having wavelengths in radio frequency fields, microwave regions and optical regions (both visible and invisible).

When terms such as "include," "comprise" and variations of these are used in this specification or in claims, these terms are intended to be inclusive, in a manner similar to the way the term "provide" is used. Furthermore, the term "or" as used in this specification or in claims is intended to be not an exclusive disjunction.

Now, although the present invention has been described in detail above, it should be obvious to a person skilled in the art that the present invention is by no means limited to the embodiments described herein. The present invention can be implemented with various corrections and in various modifications, without departing from the spirit and scope of the present invention defined by the recitations of claims. Consequently, the description herein is provided only for the purpose of explaining examples, and should by no means be construed to limit the present invention in any way.

The disclosure of Japanese Patent Application No. 2016-192336, filed on September 29, 2016, including the specification, drawings and abstract, is incorporated herein by reference in its entirety.

## Claims

1. A user terminal comprising:
a receiving section that receives downlink control information and downlink data which are transmitted in a DL burst period; and
a control section that controls transmission of a delivery acknowledgment signal in response to the downlink data, based on a result of UL listening,
wherein, when a UL burst is configured in the DL burst period, the control section exerts control to transmit the delivery acknowledgment signal in response to the downlink data by using at least one of the UL burst, a UL transmission period where UL transmission is commanded outside the DL burst period and a UL burst which is configured in another DL burst period following the DL burst period, based on a reception timing of the downlink data.

2. The user terminal according to claim 1, wherein the control section controls the transmission of the delivery acknowledgment signal in the UL transmission period based on a UL transmission command which is included in the downlink control information transmitted in the DL burst period.

3. The user terminal according to claim 1 or 2, wherein the control section controls a codebook size to apply to the transmission of the delivery acknowledgment signal, based on a location of a first subframe to transmit the delivery acknowledgment signal, a location of a second subframe to transmit a delivery acknowledgment signal before the first subframe, and a number of non-DL subframes included in a feedback window corresponding to the first subframe.

4. The user terminal according to any one of claims 1 to 3, wherein the receiving section receives information which is included in the downlink control information transmitted in each subframe in the DL burst period and which indicates an offset value from a beginning and/or an end of a DL burst.

5. A radio communication method for a user terminal, comprising:
receiving downlink control information and downlink data which are transmitted in a DL burst period; and
controlling transmission of a delivery acknowledgment signal in response to the downlink data based on a result of UL listening,
wherein, when a UL burst is configured in the DL burst period, the user terminal controls to transmit the delivery acknowledgment signal in response to the downlink data by using at least one of the UL burst, a UL transmission period where UL transmission is commanded outside the DL burst period and a UL burst which is configured in another DL burst period following the DL burst period, based on a reception timing of the downlink data.
